# EUROPEAN PATENT SPECIFICATION

(11) **EP 3 431 348 B1**
(45) Date of publication and mention of the grant of the patent: **12.02.2020**
(21) Application number: 17181878.4
(22) Date of filing: 18.07.2017
(51) Int. Cl.: B60R 22/18, B60R 22/24

(54) **SEAT-BELT GUIDE**
SITZGURTFÜHRUNG
BOUCLE DE CEINTURE DE SÉCURITÉ

(43) Date of publication of application: 23.01.2019
(73) Proprietor: Volvo Car Corporation, 405 31 Göteborg (SE)
(72) Inventor: Marklund, Leif, 436 43 Askim (SE)
(74) Representative: Valea AB

(56) References cited:
- EP-A2- 0 184 172
- DE-A1-102006 032 248
- DE-A1-102011 012 855
- JP-A- 2000 153 751

## Description

### TECHNICAL FIELD

The present disclosure relates to a seat-belt guide. The disclosure further relates to a seat-belt arrangement comprising a seat belt with a webbing and the seat-belt guide.

### BACKGROUND

A seat belt is commonly used in a vehicle, such as a car, bus, lorry or truck, to protect a seat occupant in case of e.g. a collision. A webbing of the seat belt normally passes an upper seat-belt guide, also known as a D-loop, in order to change the direction of the seat belt upon passage of webbing through the seat-belt guide. Typically, the seat belt guide has a belt guide aperture, through which the webbing passes. A force utilized to slide the webbing through the belt guide aperture thereby depends inter alia on friction characteristics of a surface exposed to the webbing, the configuration of the seat belt guide and/or type of webbing. The upper seat-belt guide is typically located in a body or a seat of the vehicle, e.g. at a pillar.

Normally a low friction is desirable for the seat belt in relation to the seat-belt guide, such that the length of the pulled-out seat belt is easily adjustable. However, in some situations, e.g. in an emergency situation, it may be desirable to have a higher frictional engagement between the seat belt and the seat-belt guide.

Patent document EP416735 discloses a locking friction seat-belt guide for an automotive seat system. The seat-belt guide includes a roller mounted for free rotational movement during normal operation and for frictional engagement with one side of the seat belt upon imposition of a load by the occupant in an emergency situation.

However, such a mechanical solution, as that described in EP416735, may be sensitive to dirt, wear and temperature changes.

It is thus a desire to provide a seat-belt guide offering a robust and reliable solution, which yet is able to provide different friction characteristics.

Document DE 10 2011 012855 A1 relates to a belt deflector having a retaining element and a deflecting element, which is rotatably mounted on the retaining element by a force limiter and which is provided to deflect a belt strap. A coupling element is adjusted between an initial state and a coupling state. The coupling element induces a frictional connection between the deflecting element and the belt strap in the coupling state. The coupling element is a silicone tape.

Document JP 2000 153751 A relates to a seatbelt support apparatus comprising a main body, on which a through-hole, through which a seatbelt provided in a vehicle body movably passes, is formed, and a guide member, which is provided on the main body and slidably guides the passing belt. The guide member is structured so that friction force, which is generated between the belt and guide member, increases, when a tension of the predetermined level or higher is applied to the belt. The seatbelt support apparatus is capable of absorbing part of the energy generated in an emergency, such as a vehicle collision.

Document EP 0 184 172 A2 relates to a seat belt guide assembly, which is to be mounted in position on a B-pillar of a motor vehicle with the seat belt extending vertically upwardly from the retractor reel, through the guide assembly and downwardly as a diagonal belt. The guide assembly incorporates an eccentric roller about which the seat belt is guided. The roller is provided with a guide defining a slot with at least one upturned end through which the seat belt passes.

### SUMMARY

The object of the present disclosure is to overcome or ameliorate at least one of the disadvantages of the prior art, or to provide a useful alternative.

The object above may be achieved by the subject-matter of claim 1. Embodiments are set forth in the appended dependent claims, in the following description and in the drawings.

Thus, the present invention relates to a seat-belt guide for a seat belt as defined in claim 1. The seat-belt guide comprises a mounting portion and a belt guide portion. The belt guide portion comprises a belt guide aperture and a lower portion, which delimits the belt guide aperture. The lower portion is adapted to be in sliding contact with a webbing of the seat belt going through the belt guide aperture. The seat-belt guide is transitable from a first state, exposing a first surface with first friction characteristics in relation to the webbing, to a second state, exposing a second surface with second friction characteristics in relation to the webbing, the second friction characteristics being different from the first friction characteristics, wherein the seat-belt guide is transitable from the first state to the second state by means of a relative displacement of the first surface in relation to the webbing, thereby positioning the first surface out of contact with the webbing and instead exposing the second surface to the webbing.

The seat belt guide according to the invention typically forms part of a seat belt arrangement of a vehicle, which is intended to be used by a seat occupant sitting in a seat of the vehicle.

The mounting portion and the belt guide portion of the seat belt guide may be angled in relation to each other. The mounting portion is attachable to the vehicle, typically to the body or the seat, e.g. by means of a bolt. The belt guide aperture typically has an oblong shape and is adapted to allow the webbing of the seat belt to pass through the belt guide aperture in a flat state, i.e. without wrinkles, to be guided by the seat-belt guide. The lower portion delimits a lower side of the belt guide aperture. The lower portion is adapted to be in sliding contact with the webbing of the seat belt, such that the webbing can slide over a portion of the surface of the lower portion. The sliding may occur when the webbing is pulled out or pulled back e.g. from/to a belt magazine e.g. located at a floor of the vehicle or at a lower portion of a pillar of the vehicle. The force utilized to slide the webbing depends inter alia on the friction characteristics of the surface the webbing is in contact with, the configuration of the seat belt guide and/or type of webbing.

The first surface forms a part of the lower portion. The first surface may be located along a surface of the lower portion, like a coating, or it may also form an internal part of the lower portion. Correspondingly, the second surface may also be a part of the lower portion. The second surface may be located on a surface of the lower portion, like a coating or it may also form an internal part of the lower portion. The first and second surfaces may together constitute the lower portion or at least a main portion of the lower portion. It would also be possible to use three, four or more different surfaces, each having pre-selectable friction characteristics in relation to the webbing.

The first and second surfaces differ as regards friction characteristics in relation to the webbing. These different friction characteristics may be selected by selecting materials, shape, finishing and/or surface structures of the first and second surfaces. Different shapes may be provided by utilizing protuberances, whose number, size and distribution may be purposely selected. Examples of different finishing influencing the friction characteristics are painting or blasting. Examples of surface structures influencing the friction characteristics are graining, waffles, corrugations or profiles.

The first state of the seat-belt guide may correspond to normal operation of the seat-belt guide. In the first state, the sliding may occur to adjust the length of the pulled-out webbing, when the seat occupant puts on the seat belt or moves in the seat. The webbing is in contact with the first surface, and not in contact with, or substantially not in contact with, the second surface. The sliding may also occur during a load-limiting phase of a crash, when the webbing is pulled out in a controlled way. The first surface preferably covers at least the surface of the lower portion, to which the webbing is in contact when in the first state of the seat belt guide. The first surface may e.g. cover about half of the perimeter of the cross-section of the lower portion. The magnitude of a load-limiting force in the first state of the seat belt depends inter alia on the first friction characteristics.

The second state of the seat-belt guide may correspond to an emergency situation. In the second state, the second surface is exposed to the webbing. The webbing is in contact with the second surface, and not in contact with, or substantially not in contact with, the first surface. The second surface preferably covers at least the surface of the lower portion, to which the webbing is in contact in the second state. In order to obtain a higher load-limiting force in the second state than in the first state, the second friction characteristics may be selected to give a higher friction than the first friction characteristics.

By utilizing the seat-belt guide according to the invention, it is possible to obtain higher load-limiting forces than with conventional technology for an emergency situation, e.g. a crash. Thereby the seat occupant is better protected in case of a crash. Further, the first surface may be selected to obtain a suitable force for non-emergency situations. Hence, it is possible to both have a suitable friction for normal operation and to have a different, e.g. higher, friction for emergency situations. The load-limiting of the seat belt may also influenced by a force limiter of the belt magazine, e.g. a retractor. By combining a selectable friction of the seat-belt guide with the force limiter of the belt magazine, it is possible to adjust the force limitation of the seat belt to the seat occupant to a desired level.

Often the second friction characteristics are selected to give a higher friction than the first friction characteristics. In some applications, it may instead be desirable to have a lower load-limiting force in the second state than in the first state. In that case, the second friction characteristics should be selected to give a lower friction than the first friction characteristics. This may e.g. be the case when the friction of the seat-belt guide is combined with the force limiter of the belt magazine in an emergency situation.

Hence, the friction characteristics of the first and/or second surfaces may be selected dependent on which level of collision forces the seat-belt guide should take care of, wherein lower friction corresponds to lower collision forces, and vice versa.

The above-mentioned relative displacement of the first surface in relation to the webbing, which results in positioning the first surface out of contact with the webbing and instead exposing the second surface to the webbing, may comprise keeping the webbing in the same position and only displacing the first surface in relation to the part of the seat belt guide being mounted to the vehicle. As an alternative, the relative displacement may comprise keeping the first surface in the same position and only displacing the webbing in relation to the part of the seat belt guide being mounted to the vehicle. As yet an alternative for the relative displacement, both the first surface and the webbing may be displaced in relation to the part of the seat belt guide being mounted to the vehicle at the same time.

The relative displacement of the first surface out of contact with the webbing may comprise displacing the first surface as a whole. Thereby the first surface is displaced as one single unit. It is e.g. not worn off or chafed off from the surface of the lower portion, since wearing off or chafing off would result in piece-wise removal.

The relative displacement of the first surface out of contact with the webbing may comprise a rotational displacement, which may be in the range of 90° to 270°, preferably from 120° to 240°, more preferably from 150° to 210°, most preferably about 180°. The lower portion may comprise or be constituted by a rotatable cylindrical body, which e.g. may be rotatable around a shaft. Then the transition from the first state to the second state is obtained by rotating the lower portion of the seat-belt guide. Due to the rotation, the first surface is displaced as a whole. However, when the seat-belt guide assumes the first or second state, the lower portion is in a fixed non-rotating position.

The relative displacement of the first surface out of contact with the webbing may comprise sliding of the first surface in relation to the second surface.

The lower portion of the belt guide portion may comprise a channel adapted to receive at least a portion of the first surface. The channel may e.g. be located within or below the second surface. Hence, the first surface may e.g. be slid into the channel.

A first portion of an envelope surface of the lower portion of the belt guide portion may be constituted by the first surface and a second portion of the envelope surface of the lower portion of the belt guide portion may be constituted by the second surface. The envelope surface of the lower portion is the surrounding surface of the lower portion except for the ends of the lower portion, at which ends the lower portion is attached to the rest of the seat belt guide. Hence, in a cross-sectional view of the lower portion, the envelope surface is seen as a perimeter of the cross-section, assuming the cross-section is made along a line perpendicularly passing the belt guide aperture of the seat-belt guide. The first portion may be in the range of 10%-90% of the perimeter of the envelope surface, preferably in the range of 20%-80%, more preferably in the range of 30%-70%, most preferably in the range of 40%-60%. The second portion may also be in the range of 10%-90% of the perimeter of the envelope surface, preferably in the range of 20%-80%, more preferably in the range of 30%-70%, most preferably in the range of 40%-60%. However, the first portion plus the second portion can at the most constitute 100% of the perimeter. The level of friction may also be influenced by the relative sizes of the first and second portions for the perimeter of the envelope surface.

The first surface may form a continuous surface and/or the second surface may form a continuous surface on the lower portion. By continuous surface is meant that the surface is not split up into sub-surfaces.

The seat-belt guide may further comprise a third surface with third friction characteristics in relation to the webbing and being located on top of the first surface and/or on top of the second surface, the third surface being removable and/or displaceable to expose the first surface and/or the second surface located below the third surface.

When the webbing abuts the third surface, the seat belt guide assumes a third state, which preferably is assumed between the first and second states. When the third surface has been at least partly removed or displaced, the under-lying first and/or second surface may be exposed to the webbing.

The first portion of the envelope surface and the second portion of the envelope surface may have different radius of curvature, preferably the second portion having a smaller radius of curvature than the first portion.

The first surface and/or the second surface may comprise a hump adapted to influence a course of the webbing being in contact with the lower portion. The friction characteristics of the hump may be selected by selecting its size and shape, e.g. its radius of curvature and for which distance the webbing abuts. If only abutting on a small surface, the surface pressure will be higher than if abutting on a larger surface. A large height of the hump may result in a longer pulled-out length of the seat belt. This may help to tighten the seat belt in an emergency situation.

The seat-belt guide may further comprise an attachment member, e.g. a bolt or a screw, adapted to attach the seat-belt guide to a vehicle body, the seat-belt guide being rotatable around the attachment member. The attachment member is preferably located off a symmetry line of the seat-belt guide, which symmetry line divides the seat-belt guide in two mirror-like halves. The belt guide aperture has a first zone at least partly surrounded by the first surface and at least one second zone at least partly surrounded by the second surface. In the first state of the seat-belt guide, the webbing slides over the first surface and, in the second state, the webbing slides over the second surface. The seat-belt guide is transitable from the first state to the second state by means of the seat-belt guide rotating from a first position exposing the first surface to the webbing to a second position exposing the second surface to the webbing.

Hence, for this case, the relative displacement of the first surface in relation to the webbing, thereby positioning the first surface out of contact with the webbing and instead exposing the second surface to the webbing, comprises moving the first surface in relation to the part of the seat belt guide being mounted to the vehicle during transition. Further, also the upper turning point of the webbing, and thus the webbing, moves in relation to the vehicle body during the transition.

Typically, the first zone is located along a lower portion of the belt guide aperture. The at least one second zone is typically at least partly located vertically above the first zone, when the seat belt guide is mounted in the vehicle, such that the webbing during normal use strives to be and remain in the first zone.

There may be a single second zone. There may also be two second zones, one at either side of the first zone.

The webbing may be wrinkled in the second state, e.g. due to a purposely selected shape and/or location of the second zone, which may also increase the friction in the second state, both in combination with, and independently of, the different friction characteristics of the first and second surfaces.

The transition from the first state to the second state may be controlled by a stop member, e.g. a pin being partly located in a bore in the seat-belt guide or in the vehicle body. When the pre-tensioning force of the webbing is high enough, the stop member will break, thereby allowing rotation of the seat-belt guide around the attachment member. The level of load limiting in the second state may be adjusted by selecting the configuration and material of the webbing, the configuration of the belt guide aperture, the first friction characteristics and/or the second friction characteristics.

The seat-belt guide further comprises a pyrotechnical device, the relative displacement of the first surface out of contact with the webbing being controlled by the pyrotechnical device.

By utilizing a pyrotechnical device to control the transition of the seat-belt guide between the states, it is possible to select at what time to change state of the seat-belt guide and/or at which force level. Hence, the state may be changed independently of the magnitude of the force applied to the webbing. The pyrotechnical device may be activated by means of a control signal from a control system of the vehicle, e.g. a SRS, a supplemental restraint system. The trigger time of the pyrotechnical device may be pre-selected dependent on which level of collision forces the seat-belt guide should take care of. Further, the trigger time may be adjustable, e.g. by the control system of the vehicle.

The seat-belt guide may comprise a retaining component, e.g. a sprint, which is transitable, e.g. by means of a displacement, from a first position preventing the relative displacement of the first surface out of contact with the webbing, to a second position allowing the relative displacement of the first surface out of contact with the webbing, wherein the pyrotechnical device is adapted to upon activation transit the retaining component from the first position to the second position, thereby controlling the relative displacement of the first surface out of contact with the webbing. However, the pyrotechnical device may trigger the relative displacement in a plurality of other ways, as is known to the person skilled in the art. The above-mentioned stop member may constitute or be comprised in the retaining component.

The present invention further relates to a seat-belt arrangement comprising a seat belt with a webbing and a seat-belt guide as described herein, wherein the webbing passes through the belt guide aperture of the seat-belt guide.

The present invention further relates to a vehicle comprising such a seat-belt arrangement.

### BRIEF DESCRIPTION OF THE DRAWINGS

The present invention will hereinafter be further explained by means of non-limiting examples with reference to the appended drawings wherein:
Fig. 1 illustrates a seat belt arrangement.
Fig. 2 illustrates a seat belt guide.
Fig. 3 illustrates a cross-section through a seat-belt guide according to prior art.
Fig. 4a-b illustrate cross-sections through a seat-belt guide according to a first embodiment of the invention.
Fig. 4c-d illustrate a pyrotechnical device controlling displacement of a first surface.
Fig. 5a-c illustrate cross-sections through a seat-belt guide according to a second embodiment of the invention.
Fig. 5d-f illustrate a pyrotechnical device controlling displacement of a first surface.
Fig. 6a-c illustrate cross-sections through a seat-belt guide according to a third embodiment of the invention.
Fig. 7a-c illustrate cross-sections through a seat-belt guide according to a fourth embodiment of the invention.
Fig. 8a-c illustrate cross-sections through a seat-belt guide according to a fifth embodiment of the invention.
Fig. 9a-c illustrate a seat-belt guide according to a sixth embodiment of the invention.

It should be noted that the appended drawings are schematic and that individual components are not necessarily drawn to scale and that the dimensions of some features of the present invention may have been exaggerated for the sake of clarity.

### DETAILED DESCRIPTION

The invention will, in the following, be exemplified by embodiments. References to "embodiments" throughout the description which are not under the scope of the appended claims merely represent possible exemplary executions and are therefore not part of the present invention. It should however be realized that the embodiments are included in order to explain principles of the invention and not to limit the scope of the invention, as defined by the appended claims. A feature from one embodiment may be combined with one or more features of any other embodiment.

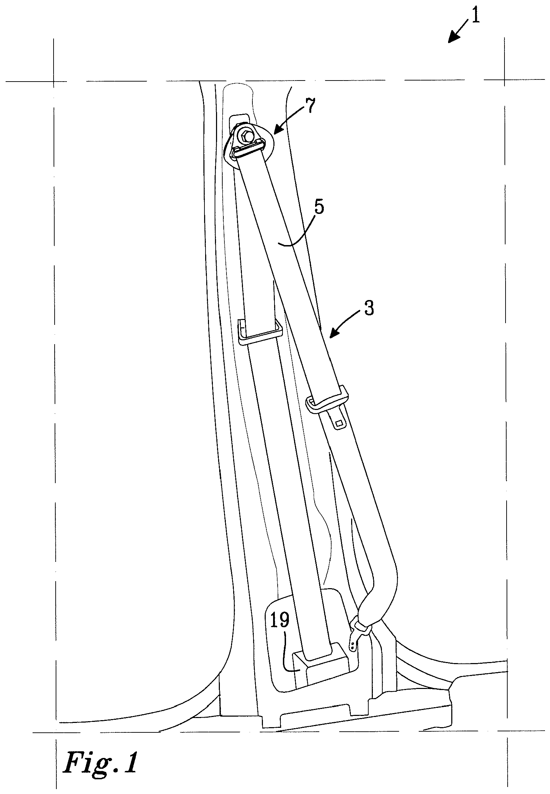

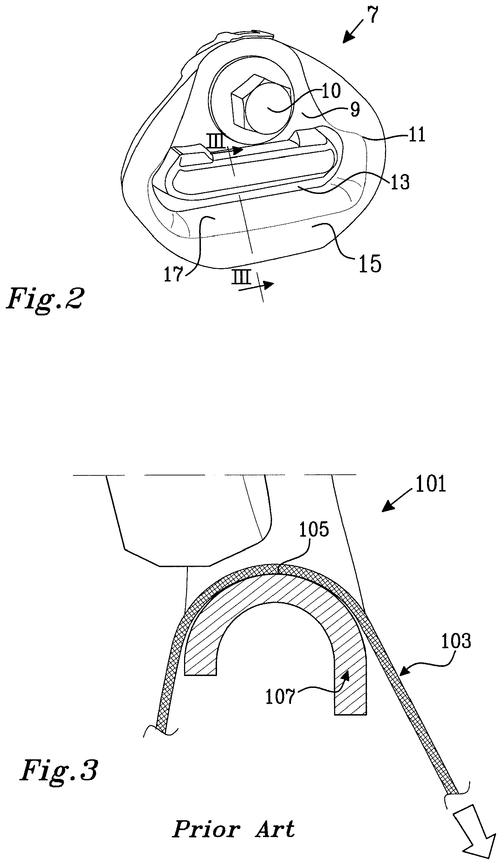

Figure 1 illustrates a seat belt arrangement 1 intended to be used in a vehicle, such as a car. The seat belt arrangement 1 comprises a seat belt 3, with a webbing 5, and a seat-belt guide 7, which is illustrated in more detail in Figure 2. The seat belt arrangement 1 is intended to be used by a seat occupant sitting in a seat of a vehicle.

As may be gleaned from Figure 2, the seat-belt guide 7 comprises a mounting portion 9, forming an upper part of the seat-belt guide 7, and a belt guide portion 11, forming a lower part of the seat-belt guide 7. The mounting portion 9 and the belt guide portion 11 may be angled in relation to each other. The mounting portion 9 is attachable to a body of the vehicle, e.g. by means of an attachment member, e.g. a bolt 10. The belt guide portion 11 comprises a belt guide aperture 13 and a lower portion 15. The belt guide aperture 13 typically has an oblong shape and is adapted to allow the webbing 5 of the seat belt 3 to pass through the belt guide aperture 13 in a flat state, i.e. without wrinkles, to be guided by the seat-belt guide 7. The lower portion 15 delimits a lower side of the belt guide aperture 13. A surface portion 17 of the lower portion 15 is adapted to be in sliding contact with the webbing 5 of the seat belt 3, such that the webbing 5 can slide over the surface portion 17. The sliding occurs when the webbing 5 is pulled out from or pulled back to a belt magazine 19, e.g. located at a floor of the vehicle or at a lower portion of a pillar of the vehicle, see Figure 1.

Figure 3 illustrates a cross-section through a seat-belt guide 101 according to prior art. The cross-section has been made along a plane corresponding to III-III in Figure 2. A webbing 103 slides over a surface 105 forming part of a lower portion 107 of the seat-belt guide 101. The force utilized to slide the webbing 103 depends inter alia on the friction characteristics of the surface 105 in relation to the webbing 103.

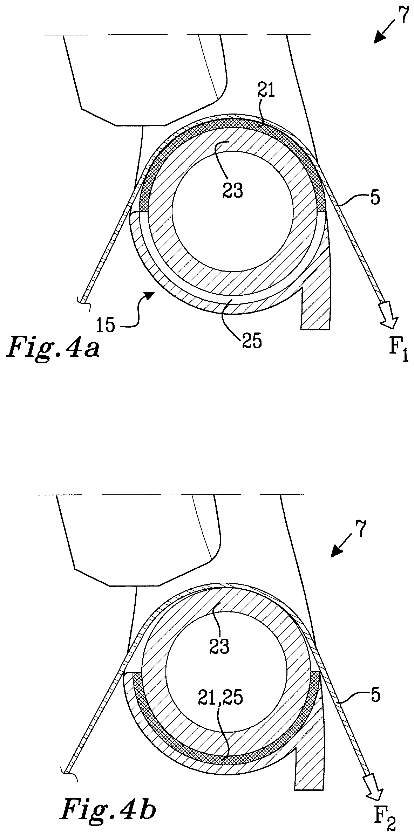

Figures 4a and 4b illustrate cross-sections through a seat-belt guide 7 according to a first embodiment of the invention. The seat-belt guide 7 forms part of the seat belt arrangement 1 of Figure 1. The cross-sections have been made along a plane corresponding to III-III in Figure 2.

Figure 4a illustrates normal pulling of the webbing 5. The seat-belt guide 7 is in a first state, corresponding to normal operation of the seat-belt guide 7. Thereby a first surface 21 with first friction characteristics in relation to the webbing 5 is exposed to the webbing 5. The webbing 5 slides over the first surface 21 when the webbing 5 is pulled by a force F₁. The first surface 21 forms a continuous surface on the lower portion 15 of the seat-belt guide 7. The webbing 5 is thus in contact with the first surface 21 only, and not in contact with, or substantially not in contact with, a second surface 23. The sliding may occur to adjust the length of the pulled-out webbing 5, when the seat occupant puts on the seat belt 3 or moves in the seat. The sliding may also occur during a load-limiting phase of a crash when the webbing 5 is pulled out from the belt magazine 19 in a controlled way. The first surface 21 preferably covers at least the surface of the lower portion 15, to which the webbing 5 is in contact. The first surface 21 may e.g. cover about half of the perimeter of the cross-section, as is illustrated in Figure 4a. The magnitude of the load-limiting force F₁ depends on the first friction characteristics.

When a higher load-limiting force F₂ is desired, the seat-belt guide 7 is transited to a second state, corresponding to an emergency situation, exposing a second surface 23 with second friction characteristics in relation to the webbing 5. See Figure 4b. In order to obtain a higher force, the second friction characteristics give a higher friction than the first friction characteristics. The second surface 23 forms a continuous surface on the lower portion 15 of the seat-belt guide 7. In the second state, the second surface 23 preferably covers at least the surface of the lower portion 15, to which the webbing 5 is in contact. The webbing 5 is in contact with the second surface 23 only, and not in contact, or substantially not in contact with, with the first surface 23.

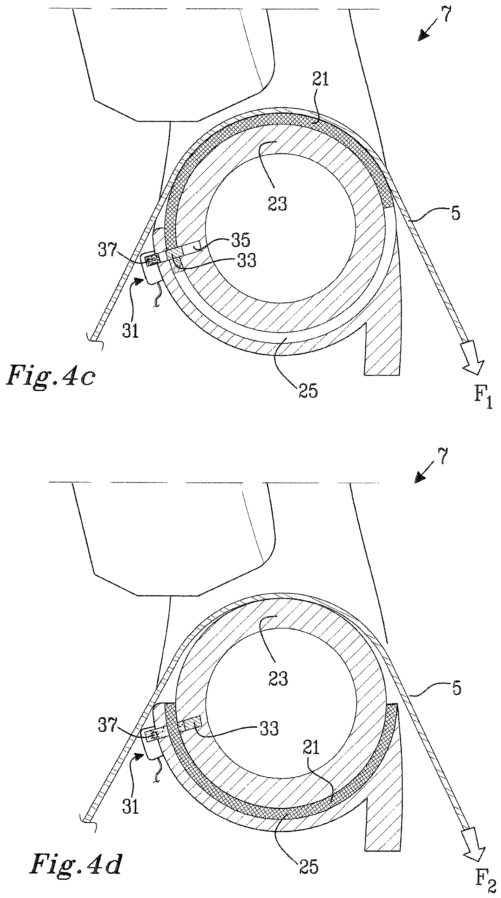

During the transition to the second state, the first surface 21 is displaced as a whole, i.e. as a single unit, by being slid in a rotating way away from contact. Thereby the first surface 21 is moved into a channel 25 adapted to receive the first surface 21. In the illustrated embodiment, the rotation of the sliding is about 180°. This displacement of the first surface 21 may be controlled by a pyro-technical device, as explained below in conjunction with Figures 4c-d.

By utilizing the seat-belt guide 7 according to the invention, it is possible to obtain higher load-limiting forces than with conventional technology for an emergency situation, e.g. a crash. Thereby the seat occupant is better protected in case of a crash. Further, the first surface 21 may be selected to obtain a suitable force for non-emergency situations. Hence, it is possible to both have a suitable friction for normal operation and to have a higher friction for emergency situations.

As an alternative, the second surface 23 may have lower friction than the first surface 21. It would also be possible to use three, four or more different surfaces, each having pre-selectable friction characteristics in relation to the webbing 5.

Figures 4c-d illustrate how a pyrotechnical device 31 is utilized to control the displacement of the first surface 21. The seat-belt guide 7 comprises a retaining component 33, illustrated as a sprint, which is displaceable from a first position preventing the displacement of the first surface 21, see Figure 4c, to a second position allowing the displacement of the first surface 21, see Figure 4d.

When the retaining component 33 is in its first position, it is partly located in a corresponding bore 35 in the lower portion 15 of the seat-belt guide 7. Thereby, the retaining component 33 locks the first surface 21 in relation to the rest of the lower portion 15, while preventing unintended displacement of the first surface 21. This corresponds to the first state of the seat-belt guide 7 seen in Figure 4a.

When the pyrotechnical device 31 is activated, e.g. by igniting a powder 37, as is shown in Figure 4d, the retaining component 33 is forced to move so far into the bore 35, that the retaining component 33 does not stop the rotational displacement of the first surface 21 anymore. The retaining component 33 has then been transited to its second position. Thereby the first surface 21 may be displaced into the channel 25, such that the seat belt guide 7 assumes its second state, also seen in Figure 4b.

By utilizing a pyrotechnical device 31 to control the transition of the seat-belt guide 7 between the states, it is possible to select at what time to change state of the seat-belt guide 7 and/or at which force level. Hence, the state may be changed independently of the magnitude of the force applied to the webbing 5. The pyrotechnical device 31 may be activated by means of a control signal from a control system of the vehicle. The trigger time of the pyrotechnical device 31 may be pre-selected dependent on which level of collision forces the seat-belt guide 7 should take care of. Further, the trigger time may be adjustable, e.g. by the control system of the vehicle.

Further, the friction characteristics of the first and/or second surfaces may be selected dependent on which level of collision forces the seat-belt guide 7 should take care of, wherein lower friction corresponds to lower collision forces, and vice versa.

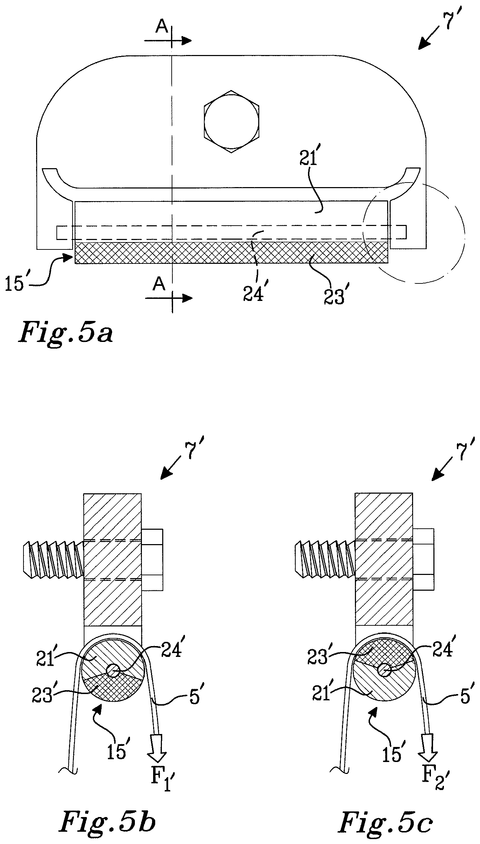

Figures 5a-5c illustrate a seat-belt guide 7' according to a second embodiment of the invention. The seat-belt guide 7' may form part of the seat belt arrangement 1 of Figure 1. Figures 5b and 5c illustrate cross-sections along a plane corresponding to A-A in Figure 5a, showing a first state and a second state, respectively, of the seat-belt guide 7'.

As can be seen in the cross-sectional Figures 5b and 5c, a first part of an envelope surface, about 60%, of the lower portion 15' of the seat-belt guide 7' is constituted by a first surface 21' with a first friction characteristics is in relation to the webbing 5'. A second part, about 40%, of the envelope surface of the lower portion 15' is constituted by a second surface 23' with second friction characteristics in relation to the webbing 5'
In the first state, as seen in Figures 5a and 5b, the webbing 5' slides over the lower portion 15' of the seat-belt guide 7', which is kept in a fixed position. Thereby the first surface 21' is exposed in relation to the webbing 5'. This results in a first load-limiting force F₁'. The first surface 21' preferably covers at least the surface of the lower portion 15', to which the webbing 5' is in contact.

When a higher load-limiting force F₂' is desired, the seat-belt guide 7' is transited to the second state exposing the second surface 23'. See Figure 5c. In order to obtain a higher force, the second friction characteristics should give a higher friction than the first friction characteristics. The second surface 23' forms a continuous surface on the lower portion 15 of the seat-belt guide 7. The second surface 23' preferably covers at least the surface of the lower portion 15', to which the webbing 5' is in contact in the second state.

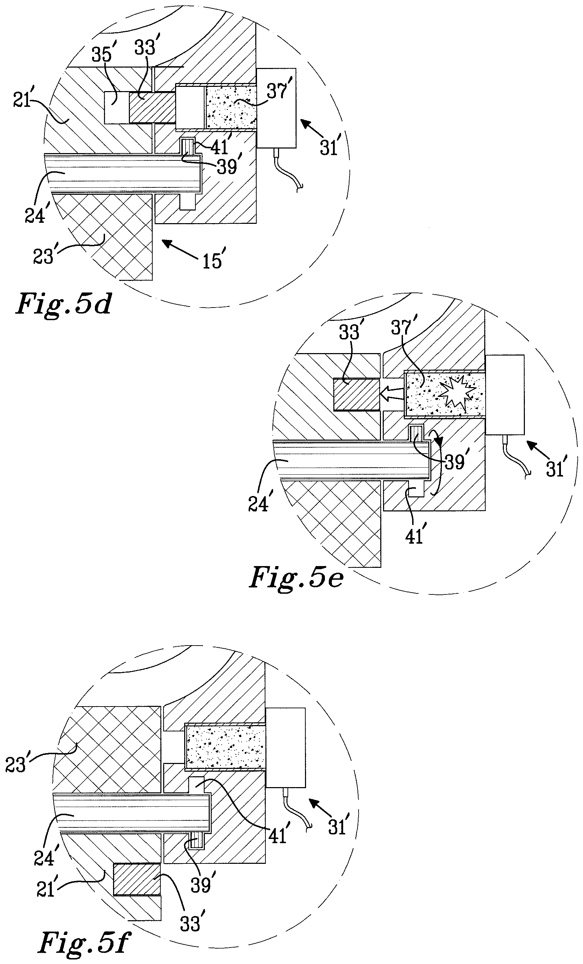

The transition to the second state is obtained by rotating the lower portion 15' of the seat-belt guide 7', wherein said rotational displacement is in the range of 90° to 270°, preferably from 120° to 240°, more preferably from 150° to 210°, most preferably about 180°, which is illustrated in Figure 5b. The lower portion 15' is shaped as a cylindrical body, which is rotatable around a shaft 24'. Due to the rotation, the first surface 21' is displaced as a whole. The rotation may be controlled by a pyro-technical device, as is described below for Figures 5d-f. However, when the seat-belt guide 7' assumes the first or second state, the lower portion 15' is in a fixed, non-rotating position.

In the illustrated embodiment, the first surface 21' and the second surface 23' together form the envelope surface of the lower portion 15' and also make up most of the cross-section. As an alternative, it would also be possible to have the first surface 21' and/or the second surface 23' located at the surface only, e.g. like a coating.

As an option, it would be possible to use three, four or more different surfaces for the envelope surface, each having pre-selectable friction characteristics in relation to the webbing 5'.

Figures 5d-f illustrate how a pyrotechnical device 31' is utilized to control the rotational displacement of the lower portion 15' of the seat-belt guide 7' of the second embodiment. The seat-belt guide 7' comprises a retaining component 33', illustrated as a sprint, which is displaceable from a first position preventing the rotational displacement of the lower portion 15', see Figure 5d, to a second position allowing the rotational displacement, see Figures 5e-f.

In the first state of the retaining component 33', it is partly located in a corresponding bore 35' in the lower portion 15' of the seat-belt guide 7'. The retaining component 33' then locks the lower portion 15' in relation to the rest of the seat-belt guide 7', thereby preventing unintended rotational displacement of the lower portion 15'. This corresponds to the first state of the seat-belt guide 7' depicted in Figure 5b.

When the pyrotechnical device 31' is activated, e.g. by igniting a powder 37', as is illustrated in Figure 5e, the retaining component 33' is forced to move so far into the bore 35', that the retaining component 33' does not stop the rotational displacement any more, see Figure 5e. The retaining component 33' then assumes its second state. The pyrotechnical device 31' may be activated by means of a control signal from the vehicle.

When the retaining component 33' is in its second state, the lower portion 15' of the seat-belt guide 7' is allowed to rotate and may thus rotate to a position being used in the second state of the seat-belt guide 7', see Figure 5f, which corresponds to the second state of the seat-belt guide 7' depicted in Figure 5c.

A pin 39' may be used to control the rotational displacement. The pin 39' runs in a corresponding cut-out 41', which follows the circumference of the lower portion 15'. The length of the cut-out 41' determines a maximal rotational displacement. In the illustrated embodiment, the desired rotational displacement is 180°, so the cut-out 41' follows substantially half of the circumference of the shaft 24'.

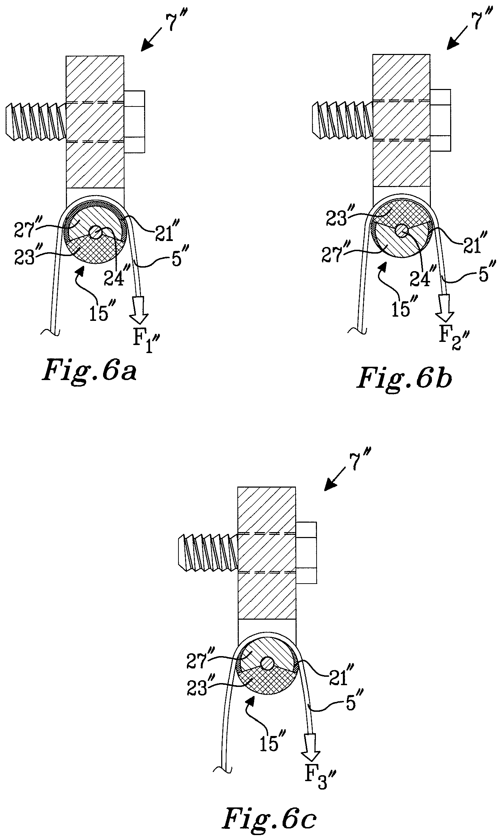

Figures 6a-6c illustrate cross-sections of a seat-belt guide 7" according to a third embodiment of the invention. The seat-belt guide 7" may form part of the seat belt arrangement 1 of Figure 1.

In the first state, as seen in Figure 6a, the webbing 5" slides over the lower portion 15" of the seat-belt guide 7', which is held in a fixed position. Thereby a first surface 21" with first friction characteristics is exposed in relation to the webbing 5". This results in a first load-limiting force F₁". The first surface 21" preferably covers at least the surface of the lower portion 15", to which the webbing 5" is in contact.

When a higher second load-limiting force F₂" is desired, the seat-belt guide 7" can be transited to the second state exposing a second surface 23" with a second friction characteristics in relation to the webbing 5" in a similar way as described above for the second embodiment, e.g. by rotation of the lower portion 15", shaped as a cylindrical body, being rotatable around a shaft 24".

However, the seat-belt guide 7" according to the third embodiment may also assume a third state exposing a third surface 27" with third friction characteristics in relation to the webbing 5". See Figure 6c. In the third state, there is a load-limiting force F₃" given by the third friction characteristic, which may have a magnitude in between the first load-limiting force F₁" and the second load-limiting force F₂". The seat-belt guide 7" is transited from the first state to the third state by chafing off the first surface 21" to reach the third surface 27", which is located below the first surface 21". Hence, the first surface 21" is located as a top material covering the third surface 27". As an alternative or a complement, several material layers may be made with different friction characteristics.

Preferably, the third state is assumed between the first and second states. Hence, in the second state, see Figure 6b, the first surface 21" would be chafed off. However, the seat-belt guide 7" may also be transited directly from the first to the second state and in that case the first surface 21" would still be present.

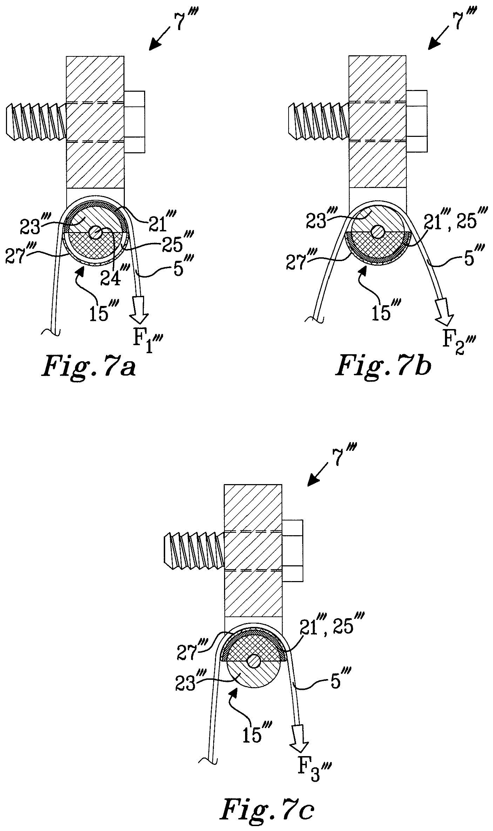

Figures 7a-7c illustrate cross-sections of a seat-belt guide 7''' according to a fourth embodiment of the invention. The seat-belt guide 7''' may form part of the seat belt arrangement 1 of Figure 1.

The seat-belt guide 7''' is transited from a first state exposing a first surface 21''', see Figure 7a, to a second state exposing a second surface 23''', see Figure 7b, in a similar way as described above for the first embodiment, i.e. by displacing the first surface 21''' into a channel 25'''.

The seat-belt guide 7''' is transited from the second state to a third state, see Figure 7c, exposing a third surface 27''' in a similar way as described above for the second embodiment, i.e. by rotation of the lower portion 15''', which is shaped as a cylindrical body and is rotatable around a shaft 24"'. In this embodiment, the third state is preferably assumed after the second state.

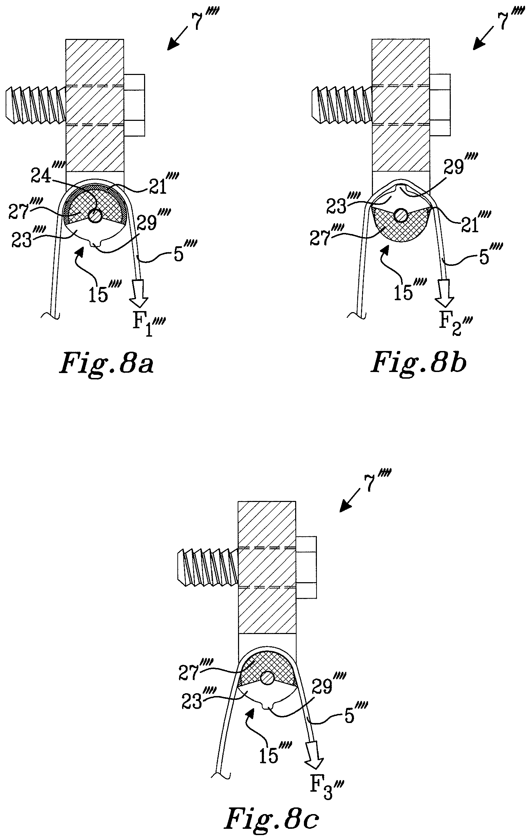

Figures 8a-8c illustrate cross-sections of a seat-belt guide 7''' according to a fifth embodiment of the invention. The seat-belt guide 7'''' may form part of the seat belt arrangement 1 of Figure 1.

The seat-belt guide 7'''' is transited from the first state, see Figure 8a, exposing a first surface 21'''' to the second state exposing a second surface 23'''' in a similar way as described above for the second embodiment, i.e. by rotation of the lower portion 15'''' around a shaft 24''''. In this embodiment, the second surface 23'''' comprises a hump 29''''. In the second state, the webbing 5'''' abuts the hump 29''''. Thereby, the webbing 5'''' does not follow the surface of the portion of the second surface 23'''' being adjacent to the hump 29'''', since the hump 29'''' partly lifts the webbing 5'''' above this surface. This will influence the course of the webbing 5'''', i.e. how sharp the webbing 5'''' changes direction at the seat-belt guide 7''''. The friction characteristics of the hump 29'''' may be selecting by selecting its size and/or shape, e.g. its radius of curvature and for which distance the webbing 5'''' abuts. If only abutting on a small surface, the surface pressure will be higher than if abutting on a larger surface.

As an option, illustrated in Figure 8c, there may also be a third state, corresponding to that of third embodiment illustrated in Figure 6c. Preferably, the third state is assumed between the first and second states. The seat-belt guide 7'''' is transited from the first state to the third state exposing a third surface 27'''' in a similar way as described above for the second embodiment, i.e. by chafing off the first surface 21'''' to reach the third surface 27'''' which is located below the first surface 21''''.

As a further option, the hump 29'''' of the fifth embodiment illustrated in Figures 8a-c may be combined with a channel corresponding to the channel 25 of the first embodiment illustrated in Figures 4a-b or the channel 25'''' of the fourth embodiment illustrated in Figures 7a-c.

Also the seat-belt guide 7'''' of the fifth embodiment illustrated in Figures 8a-c is controlled by a pyrotechnical device.

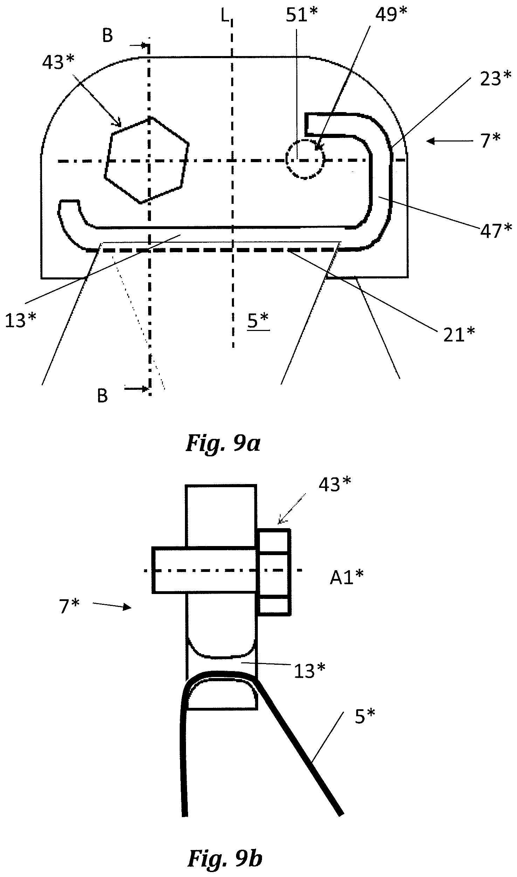

Figures 9a-9c illustrate a seat-belt guide 7* according to a sixth embodiment of the invention. The seat-belt guide 7* may form part of the seat belt arrangement 1 of Figure 1.

The seat-belt guide 7* comprises an attachment member 43*, illustrated as a bolt, which allows rotation of the seat-belt guide 7* in relation to the vehicle body. In a preferred embodiment, which is illustrated in Figures 9a-c, the attachment member 43* is located off a symmetry line L of the seat-belt guide 7*, which symmetry line L divides the seat-belt guide 7* in two mirror-like halves. As further explained below, the two halves are not exact mirror images of each other.

As may be gleaned from Figure 9a, the belt guide aperture 13* has a first zone 45* at least partly surrounded by the first surface 21* with first friction characteristics in relation to the webbing 5*, see dashed line, and a second zone 47*, at least partly surrounded by the second surface 23* with second friction characteristics in relation to the webbing 5*.

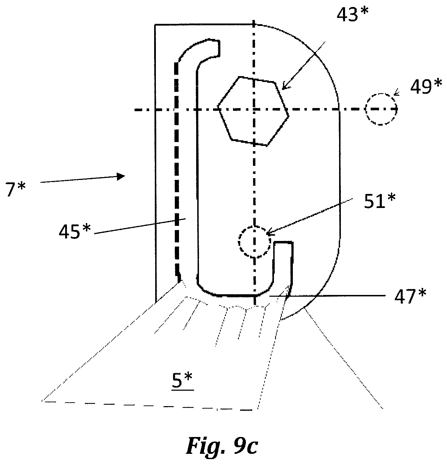

In the first state of the seat-belt guide 7*, see Figure 9a, the webbing 5* slides over the first surface 21* and in the second state, see Figure 9c, the webbing 5* slides over the second surface 23*. In addition the webbing 5* may be wrinkled in the second state due to the shape of the second zone 47*, which also increases the friction in the second state.

The seat-belt guide 7* is transitable from the first state to the second state by means of the seat-belt guide 7* rotating from a first position exposing the first surface 21* to the webbing 5* to a second position exposing the second surface 23* to the webbing 5*.

Figure 9b illustrates a cross-section of Figure 9a along the line B-B. The rotation of the seat-belt guide 7* occurs around the attachment member 43* having the rotation axis A1*.

The transition from the first state to the second state is in the illustrated embodiment controlled by a stop member 49*, e.g. a pin, which is partly located in a bore 51* in the seat-belt guide 7*. When the pre-tensioning force of the webbing 5* is high enough, the stop member 49* will break, thereby allowing rotation of the seat-belt guide 7* around the attachment member 43*.

Hence, for the sixth embodiment, the relative displacement of the first surface 21* in relation to the webbing 5*, thereby positioning the first surface 21* out of contact with the webbing 5* and instead exposing the second surface 23* to the webbing 5*, comprises moving the first surface 21* in relation to the vehicle body during the transition by means of the rotation of the seat-belt guide 7*. Further, also the upper turning point of the webbing 5*, and thus the webbing 5*, moves in relation to the vehicle body during the transition.

The level of load limiting in the second state may be adjusted by selecting the configuration and material of the webbing 5*, the configuration of the belt guide aperture 13*, the first friction characteristics and/or the second friction characteristics.

Correspondingly to the embodiments described above, the transition to the second state is triggered by a pyrotechnical device acting on the stop member 49*, which then acts as a retaining component for the seat-belt guide 7*, such that the stop member 49* is moved from a first position preventing the rotation of the seat-belt guide 7* relative to the vehicle body, cf. the sprint 33' of Figure 5d, to a second position allowing the rotation of the seat-belt guide 7* relative to the vehicle body, cf. the sprint 33' of Figure 5e.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A seat-belt guide (7, 7', 7", 7''', 7'''',7*) for a seat belt (3), said seat-belt guide comprising a mounting portion (9) and a belt guide portion (11), said belt guide portion comprising a belt guide aperture (13, 13*) and a lower portion (15, 15', 15", 15''', 15''''), which delimits said belt guide aperture (13, 13'), said lower portion (15, 15', 15", 15''', 15'''') being adapted to be in sliding contact with a webbing (5, 5', 5", 5''', 5'''', 5*) of said seat belt (3) going through said belt guide aperture (13, 13*), said seat-belt guide (7, 7', 7", 7''', 7'''', 7*) being transitable from a first state, exposing a first surface (21, 21', 21", 21''', 21'''', 21*) with first friction characteristics in relation to said webbing (5, 5', 5", 5''', 5'''', 5*), to a second state, exposing a second surface (23, 23', 23", 23''', 23'''', 23*) with second friction characteristics in relation to said webbing (5, 5', 5", 5''', 5'''', 5*), said second friction characteristics being different from said first friction characteristics,
said seat-belt guide (7, 7', 7", 7''', 7'''', 7*) being transitable from said first state to said second state by means of a relative displacement of said first surface (21, 21', 21", 21''', 21'''', 21*) in relation to said webbing (5, 5', 5", 5''', 5'''', 5*), thereby positioning said first surface (21, 21', 21", 21''', 21'''', 21*) out of contact with said webbing (5, 5', 5", 5''', 5'''', 5*) and instead exposing said second surface (23, 23', 23", 23''', 23'''', 23*) to the webbing (5, 5', 5", 5''', 5'''', 5*),
**characterized in that**
said seat-belt guide further comprises a pyrotechnical device (31, 31'), said relative displacement of said first surface (21, 21') out of contact with said webbing (5, 5') being controlled by said pyrotechnical device (31, 31').

2. The seat-belt guide (7, 7', 7", 7''', 7'''', 7*) according to claim 1, wherein said second friction characteristics give a higher friction in relation to said webbing (5, 5', 5", 5''', 5'''', 5*) than said first friction characteristics.

3. The seat-belt guide (7, 7', 7", 7''', 7'''') according to claim 1 or 2, wherein said relative displacement of said first surface (21, 21', 21", 21''', 21'''') out of contact with said webbing (5, 5', 5", 5''', 5'''') comprises displacing said first surface (21, 21'. 21". 21''', 21'''') as a whole.

4. The seat-belt guide (7, 7', 7", 7''', 7'''') according to any one of the preceding claims, wherein said relative displacement of said first surface (21, 21', 21", 21''', 21'''') out of contact with said webbing (5, 5', 5", 5''', 5'''') comprises a rotational displacement.

5. The seat-belt guide (7', 7", 7''', 7'''') according to claim 4, wherein said lower portion (15', 15", 15''', 15'''') comprises, or is constituted by, a rotatable cylindrical body.

6. The seat-belt guide (7, 7''') according to any one of the preceding claims, wherein said relative displacement of said first surface (21, 21''') out of contact with said webbing (5, 5''') comprises sliding of said first surface (21, 21''') in relation to said second surface (23, 23''').

7. The seat-belt guide (7, 7''') according to claim 6, wherein said lower portion (15, 15''') of said belt guide portion (11) comprises a channel (25, 25''') adapted to receive at least a portion of said first surface (21, 21''').

8. The seat-belt guide (7, 7', 7", 7''', 7'''') according to any one of the preceding claims, wherein a first portion of an envelope surface of said lower portion (15, 15', 15", 15''', 15'''') of said belt guide portion (11) is constituted by said first surface (21, 21', 21", 21''', 21'''') and a second portion of said envelope surface of said lower portion (15, 15', 15", 15''', 15'''') of said belt guide portion (11) is constituted by said second surface (23, 23', 23", 23''', 23'''').

9. The seat-belt guide (7, 7', 7", 7''', 7'''', 7*) according to any one of the preceding claims, wherein said first surface (21, 21', 21", 21''', 21'''', 21*) forms a continuous surface and/or said second surface (23, 23', 23", 23''', 23'''', 23*) forms a continuous surface.

10. The seat-belt guide (7", 7''', 7'''') according to any one of the preceding claims further comprising a third surface (27", 27"', 27'''') located on top of said first surface (21", 21''', 21'''') and/or on top of said second surface (27", 27''', 27''''), said third surface (23", 23''', 23'''') being removable and/or displaceable to expose said first surface (21", 21''', 21'''') and/or said second surface (27", 27''', 27'''') located below said third surface (27", 27''', 27'''').

11. The seat-belt guide according to claim 8, or any one of claims 9-10 when dependent on claim 8, wherein said first portion of said envelope surface and said second portion of said envelope surface have different radius of curvature, preferably said second portion having a smaller radius of curvature than said first portion.

12. The seat-belt guide (7'''') according to any one of the preceding claims, wherein said first surface (21'''') and/or said second surface comprises a hump (29'''') adapted to influence a course of the webbing (5'''') being in contact with said lower portion.

13. The seat-belt guide (7*) according to any one of claims 1-4, wherein said seat-belt guide (7*) further comprises an attachment member (43*) adapted to attach said seat-belt guide (7*) to a vehicle body, said seat-belt guide (7*) being rotatable around said attachment member (43*), said attachment member (43*) preferably being located off a symmetry line (L) of said seat-belt guide (7*), said belt guide aperture (13*) having a first zone (45*) at least partly surrounded by said first surface (21*) and at least one second zone (47*) at least partly surrounded by said second surface (23*), said seat-belt guide (7*) being transitable from said first state to said second state by means of said seat-belt guide (7*) rotating from a first position exposing said first surface (21*) to said webbing (5*) to a second position exposing said second surface (23*) to said webbing (5*).

14. The seat-belt guide (7, 7', 7", 7''', 7'''',7*) according to any one of the preceding claims, wherein said seat-belt guide (7, 7') further comprises a retaining component, e.g. a sprint (33, 33', 49*), which is transitable from a first position preventing said relative displacement of said first surface (21, 21') out of contact with said webbing (5, 5'), to a second position allowing said relative displacement of said first surface (21, 21') out of contact with said webbing (5, 5'), wherein said pyrotechnical device (31, 31') is adapted to upon activation transit said retaining component (33, 33', 49*) from said first position to said second position, thereby controlling said relative displacement of said first surface (21, 21') out of contact with said webbing (5, 5').

## Patentansprüche

1. Sicherheitsgurtführung (7, 7', 7", 7''', 7'''',7*) für einen Sicherheitsgurt (3), wobei die Sicherheitsgurtführung einen Befestigungsabschnitt (9) und einen Gurtführungsabschnitt (11) umfasst, wobei der Gurtführungsabschnitt eine Gurtführungsöffnung (13, 13*) und einen unteren Abschnitt (15, 15', 15", 15''', 15''''), der die Gurtführungsöffnung (13, 13') begrenzt, umfasst, wobei der untere Abschnitt (15, 15', 15", 15''', 15'''') dazu ausgelegt ist, mit einem durch die Gurtführungsöffnung (13, 13*) laufenden Band (5, 5', 5", 5''', 5'''', 5*) des Sicherheitsgurts (3) in Gleitkontakt zu stehen, wobei die Sicherheitsgurtführung (7, 7', 7", 7''', 7'''', 7*) von einem ersten Zustand, in dem eine erste Fläche (21, 21', 21'', 21''', 21'''', 21*) mit ersten Reibungseigenschaften in Bezug auf das Band (5, 5', 5'', 5''', 5'''', 5*) freigelegt ist, in einen zweiten Zustand, in dem eine zweite Fläche (23, 23', 23'', 23''', 23'''', 23*) mit zweiten Reibungseigenschaften in Bezug auf das Band (5, 5', 5'', 5''', 5'''', 5*) freigelegt ist, überführbar ist, wobei sich die zweiten Reibungseigenschaften von den ersten Reibungseigenschaften unterscheiden, wobei die Sicherheitsgurtführung (7, 7', 7'', 7''', 7'''', 7*) durch eine relative Verschiebung der ersten Fläche (21, 21', 21", 21''', 21'''', 21*) in Bezug auf das Band (5, 5', 5'', 5''' , 5'''', 5*) vom ersten Zustand in den zweiten Zustand überführbar ist, wodurch die erste Fläche (21, 21', 21", 21''', 21'''', 21*) außer Kontakt mit dem Band (5, 5', 5'', 5''' 5'''', 5*) gebracht wird und stattdessen die zweite Fläche (23, 23', 23'', 23''', 23'''', 23*) in Bezug auf das Band (5, 5', 5'', 5, 5'''', 5*) freigelegt wird,
**dadurch gekennzeichnet, dass** die Sicherheitsgurtführung ferner eine pyrotechnische Vorrichtung (31, 31') umfasst, wobei die relative Verschiebung der ersten Fläche (21, 21') außer Kontakt mit dem Band (5, 5') durch die pyrotechnische Vorrichtung (31, 31') gesteuert wird.

2. Sicherheitsgurtführung (7, 7', 7", 7''', 7'''', 7*) nach Anspruch 1, wobei die zweiten Reibungseigenschaften eine höhere Reibung in Bezug auf das Band (5, 5', 5'', 5''', 5'''', 5*) als die ersten Reibungseigenschaften ergeben.

3. Sicherheitsgurtführung (7, 7', 7'', 7''', 7'''') nach Anspruch 1 oder 2, wobei die relative Verschiebung der ersten Fläche (21, 21', 21", 21''' , 21'''') außer Kontakt mit dem Band (5, 5', 5'', 5''' 5'''') das Verschieben der ersten Fläche (21, 21', 21", 21''', 21'''') im Ganzen umfasst.

4. Sicherheitsgurtführung (7, 7', 7", 7''', 7'''') nach einem der vorangehenden Ansprüche, wobei die relative Verschiebung der ersten Fläche (21, 21', 21", 21''', 21'''') außer Kontakt mit dem Band (5, 5', 5'', 5''', 5'''') eine Drehverschiebung umfasst.

5. Sicherheitsgurtführung (7', 7", 7''', 7'''') nach Anspruch 4, wobei der untere Abschnitt (15', 15'', 15''', 15'''') einen drehbaren zylindrischen Körper umfasst oder aus einem solchen gebildet ist.

6. Sicherheitsgurtführung (7, 7''') nach einem der vorangehenden Ansprüche, wobei die relative Verschiebung der ersten Fläche (21, 21''') außer Kontakt mit dem Band (5, 5''') ein Gleiten der ersten Fläche (21, 21''') in Bezug auf die zweite Fläche (23, 23''') umfasst.

7. Sicherheitsgurtführung (7, 7''') nach Anspruch 6, wobei der untere Abschnitt (15, 15''') des Gurtführungsabschnitts (11) einen Kanal (25, 25''') umfasst, der dazu ausgelegt ist, zumindest einen Abschnitt der ersten Fläche (21, 21''') aufzunehmen.

8. Sicherheitsgurtführung (7, 7', 7", 7''', 7'''') nach einem der vorangehenden Ansprüche, wobei ein erster Abschnitt einer Hüllfläche des unteren Abschnitts (15, 15', 15'', 15''', 15'''') des Gurtführungsabschnitts (11) durch die erste Fläche (21, 21', 21'', 21''' , 21'''') gebildet ist und ein zweiter Abschnitt der Hüllfläche des unteren Abschnitts (15, 15', 15'', 15''', 15'''') des Gurtführungsabschnitts (11) durch die zweite Fläche (23, 23', 23", 23''', 23'''') gebildet ist.

9. Sicherheitsgurtführung (7, 7', 7", 7''', 7'''', 7*) nach einem der vorangehenden Ansprüche, wobei die erste Fläche (21, 21', 21", 21''', 21'''', 21*) eine durchgehende Fläche ausbildet und/oder wobei die zweite Fläche (23, 23', 23'', 23''', 23'''', 23*) eine durchgehende Fläche ausbildet.

10. Sicherheitsgurtführung (7", 7''', 7'''') nach einem der vorangehenden Ansprüche, ferner umfassend eine dritte Fläche (27", 27''', 27''''), die sich oben auf der ersten Fläche (21", 21''', 21'''') und/oder oben auf der zweiten Fläche (27", 27''', 27'''') befindet, wobei die dritte Fläche (23'', 23''', 23'''') abnehmbar und/oder verschiebbar ist, um die unter der dritten Fläche (27'', 27''', 27'''') befindliche erste Fläche (21'', 21''', 21'''') und/oder zweite Fläche (27", 27''' , 27'''') freizulegen.

11. Sicherheitsgurtführung nach Anspruch 8 oder einem der Ansprüche 9 - 10, soweit abhängig von Anspruch 8, wobei der erste Abschnitt der Hüllfläche und der zweite Abschnitt der Hüllfläche unterschiedliche Krümmungsradien aufweisen, wobei der zweite Abschnitt vorzugsweise einen kleineren Krümmungsradius als der erste Abschnitt aufweist.

12. Sicherheitsgurtführung (7'''') nach einem der vorangehenden Ansprüche, wobei die erste Fläche (21'''') und/oder die zweite Fläche einen Buckel (29'''') umfassen, der dazu ausgelegt ist, einen Verlauf des Bands (5''''), das mit dem unteren Abschnitt in Kontakt steht, zu beeinflussen.

13. Sicherheitsgurtführung (7*) nach einem der Ansprüche 1 - 4, wobei die Sicherheitsgurtführung (7*) ferner ein Befestigungselement (43*) umfasst, das dazu ausgelegt ist, die Sicherheitsgurtführung (7*) an einer Fahrzeugkarosserie zu befestigen, wobei die Sicherheitsgurtführung (7*) um das Befestigungselement (43*) drehbar ist, wobei sich das Befestigungselement (43*) vorzugsweise außerhalb einer Symmetrielinie (L) der Sicherheitsgurtführung (7*) befindet, wobei die Gurtführungsöffnung (13*) einen ersten Bereich (45*), der zumindest teilweise von der ersten Fläche (21*) umgeben ist, und zumindest einen zweiten Bereich (47*), der zumindest teilweise von der zweiten Fläche (23*) umgeben ist, aufweist, wobei die Sicherheitsgurtführung (7*) vom ersten Zustand in den zweiten Zustand mit Hilfe der Sicherheitsgurtführung (7*) überführbar ist, die sich von einer ersten Position, in der die erste Fläche (21*) in Bezug auf das Band (5*) freiliegt, in eine zweite Position, in der die zweite Fläche (23*) in Bezug auf das Band (5*) freiliegt, dreht.

14. Sicherheitsgurtführung (7, 7', 7", 7''', 7'''', 7*) nach einem der vorangehenden Ansprüche, wobei die Sicherheitsgurtführung (7, 7') ferner ein Haltebauteil, z. B. einen Sprint (33, 33', 49*), umfasst, das von einer ersten Position, die die relative Verschiebung der ersten Fläche (21, 21') außer Kontakt mit dem Band (5, 5') verhindert, in eine zweite Position, die die relative Verschiebung der ersten Fläche (21, 21') außer Kontakt mit dem Band (5, 5') zulässt, überführbar ist, wobei die pyrotechnische Vorrichtung (31, 31') dazu ausgelegt ist, bei Aktivierung das Haltebauteil (33, 33', 49*) von der ersten Position in die zweite Position zu überführen, wodurch die relative Verschiebung der ersten Fläche (21, 21') außer Kontakt mit dem Band (5, 5') gesteuert wird.

## Revendications

1. Guide de ceinture de sécurité (7, 7', 7'', 7''', 7'''',7*) pour une ceinture de sécurité (3), ledit guide de ceinture de sécurité comprenant une portion de montage (9) et une portion de guidage de ceinture (11), ladite portion de guidage de ceinture comprenant une ouverture de guidage de ceinture (13, 13*) et une portion inférieure (15, 15', 15'', 15''', 15'''') , qui délimite ladite ouverture de guidage de ceinture (13, 13'), ladite portion inférieure (15, 15', 15'', 15''', 15'''') étant adaptée pour être en contact coulissant avec une sangle (5, 5', 5'', 5''', 5'''', 5*) de ladite ceinture de sécurité (3) traversant ladite ouverture de guidage de ceinture (13, 13*), ledit guide de ceinture de sécurité (7, 7', 7", 7''', 7'''', 7*) étant permutable d'un premier état, exposant une première surface (21, 21', 21'', 21''', 21'''', 21*) avec des premières caractéristiques de friction par rapport à ladite sangle (5, 5', 5'', 5''', 5'''', 5*), à un second état, exposant une deuxième surface (23, 23', 23'', 23''', 23'''', 23*) avec des secondes caractéristiques de friction par rapport à ladite sangle (5, 5', 5'', 5''', 5'''', 5*) , lesdites secondes caractéristiques de friction étant différentes desdites premières caractéristiques de friction,
ledit guide de ceinture de sécurité (7, 7', 7", 7''', 7'''', 7*) étant permutable dudit premier état audit second état au moyen d'un déplacement relatif de ladite première surface (21, 21', 21", 21''', 21'''', 21*) par rapport à ladite sangle (5, 5', 5'', 5''', 5'''', 5*), positionnant ainsi ladite première surface (21, 21', 21", 21''', 21'''', 21*) hors de contact avec ladite sangle (5, 5', 5", 5''', 5'''', 5*) et, à la place, exposant ladite deuxième surface (23, 23', 23'', 23''', 23'''', 23*) à la sangle (5, 5', 5'', 5''', 5'''', 5*),
**caractérisé en ce que**
ledit guide de ceinture de sécurité comprend en outre un dispositif pyrotechnique (31, 31'), ledit déplacement relatif de ladite première surface (21, 21') hors de contact avec ladite sangle (5, 5') étant commandé par ledit dispositif pyrotechnique (31, 31').

2. Guide de ceinture de sécurité (7, 7', 7'', 7''', 7'''', 7*) selon la revendication 1, dans lequel lesdites secondes caractéristiques de friction donnent une friction plus élevée par rapport à ladite sangle (5, 5', 5'', 5''', 5'''', 5*) que lesdites premières caractéristiques de friction.

3. Guide de ceinture de sécurité (7, 7', 7'', 7''', 7'''') selon la revendication 1 ou 2, dans lequel ledit déplacement relatif de ladite première surface (21, 21', 21", 21''', 21'''') hors de contact avec ladite sangle (5, 5', 5'', 5''', 5'''') comprend le déplacement de ladite première surface (21, 21', 21", 21''', 21'''') dans son ensemble.

4. Guide de ceinture de sécurité (7, 7', 7'', 7''', 7'''') selon l'une quelconque des revendications précédentes, dans lequel ledit déplacement relatif de ladite première surface (21, 21', 21", 21''', 21'''') hors de contact avec ladite sangle (5, 5', 5'', 5''', 5'''') comprend un déplacement rotatif.

5. Guide de ceinture de sécurité (7', 7'', 7''', 7'''') selon la revendication 4, dans lequel ladite portion inférieure (15', 15'', 15''', 15'''') comprend, ou est constituée par, un corps cylindrique rotatif.

6. Guide de ceinture de sécurité (7, 7''') selon l'une quelconque des revendications précédentes, dans lequel ledit déplacement relatif de ladite première surface (21, 21''') hors de contact avec ladite sangle (5, 5''') comprend le coulissement de ladite première surface (21, 21''') par rapport à ladite deuxième surface (23, 23''').

7. Guide de ceinture de sécurité (7, 7''') selon la revendication 6, dans lequel ladite portion inférieure (15, 15''') de ladite portion de guidage de ceinture (11) comprend un canal (25, 25''') adapté pour recevoir au moins une portion de ladite première surface (21, 21''').

8. Guide de ceinture de sécurité (7, 7', 7'', 7''', 7'''') selon l'une quelconque des revendications précédentes, dans lequel une première portion d'une surface d'enveloppe de ladite portion inférieure (15, 15', 15'', 15''', 15'''') de ladite portion de guidage de ceinture (11) est constituée par ladite première surface (21, 21', 21'', 21''', 21'''') et une seconde portion de ladite surface d'enveloppe de ladite portion inférieure (15, 15', 15", 15''', 15'''') de ladite portion de guidage de ceinture (11) est constituée par ladite deuxième surface (23, 23', 23'', 23''', 23'''').

9. Guide de ceinture de sécurité (7, 7', 7'', 7''', 7'''', 7*) selon l'une quelconque des revendications précédentes, dans lequel ladite première surface (21, 21', 21", 21''', 21'''', 21*) forme une surface continue et/ou ladite deuxième surface (23, 23', 23'', 23''', 23'''', 23*) forme une surface continue.

10. Guide de ceinture de sécurité (7", 7''', 7'''') selon l'une quelconque des revendications précédentes comprenant en outre une troisième surface (27'', 27''', 27'''') située au-dessus de ladite première surface (21'', 21''', 21'''') et/ou au-dessus de ladite deuxième surface (27'', 27''', 27''''), ladite troisième surface (23'', 23''', 23'''') étant amovible et/ou déplaçable pour exposer ladite première surface (21'', 21''', 21'''') et/ou ladite deuxième surface (27'', 27''', 27'''') située en dessous de ladite troisième surface (27'', 27''', 27'''').

11. Guide de ceinture de sécurité selon la revendication 8, ou l'une quelconque des revendications 9 et 10 lorsqu'elle dépend de la revendication 8, dans lequel ladite première portion de ladite surface d'enveloppe et ladite seconde portion de ladite surface d'enveloppe ont des rayons de courbure différents, de préférence ladite seconde portion ayant un rayon de courbure plus petit que ladite première portion.

12. Guide de ceinture de sécurité (7'''') selon l'une quelconque des revendications précédentes, dans lequel ladite première surface (21'''') et/ou ladite deuxième surface comprend une bosse (29'''') adaptée pour influencer une course de la sangle (5'''') qui est en contact avec ladite portion inférieure.

13. Guide de ceinture de sécurité (7*) selon l'une quelconque des revendications 1 à 4, ledit guide de ceinture de sécurité (7*) comprenant en outre un élément de fixation (43*) adapté pour fixer ledit guide de ceinture de sécurité (7*) à une carrosserie de véhicule, ledit guide de ceinture de sécurité (7*) étant rotatif autour dudit élément de fixation (43*), ledit élément de fixation (43*) étant de préférence situé de façon décalée par rapport à une ligne de symétrie (L) dudit guide de ceinture de sécurité (7*), ladite ouverture de guidage de ceinture (13*) ayant une première zone (45*) au moins partiellement entourée par ladite première surface (21*) et au moins une seconde zone (47*) au moins partiellement entourée par ladite deuxième surface (23*), ledit guide de ceinture de sécurité (7*) étant permutable dudit premier état audit second état au moyen dudit guide de ceinture de sécurité (7*) entrant en rotation depuis une première position, exposant ladite première surface (21*) à ladite sangle (5*), jusqu'à une seconde position, exposant ladite deuxième surface (23*) à ladite sangle (5*).

14. Guide de ceinture de sécurité (7, 7', 7", 7''', 7'''', 7*) selon l'une quelconque des revendications précédentes, ledit guide de ceinture de sécurité (7, 7') comprenant en outre un composant de retenue, par exemple un sprint (33, 33', 49*), qui est permutable d'une première position, empêchant ledit déplacement relatif de ladite première surface (21, 21') hors de contact avec ladite sangle (5, 5'), à une seconde position, permettant ledit déplacement relatif de ladite première surface (21, 21') hors de contact avec ladite sangle (5, 5'), dans lequel ledit dispositif pyrotechnique (31, 31') est adapté pour, lors de l'activation, faire passer ledit composant de retenue (33, 33', 49*) de ladite première position à ladite seconde position, commandant ainsi ledit déplacement relatif de ladite première surface (21, 21') hors de contact avec ladite sangle (5, 5').
